# EUROPÄISCHE PATENTSCHRIFT

(11) **EP 1 387 114 B1**
(45) Veröffentlichungstag und Bekanntmachung des Hinweises auf die Patenterteilung: **14.06.2006**
(21) Anmeldenummer: 03015152.6
(22) Anmeldetag: 04.07.2003
(51) Int. Cl.: F16J 15/32

(54) **Manschettendichtung**
Sleeve shaft seal
Joint d'étanchéité à manchette

(30) Priorität: 31.07.2002 DE 10235079
(43) Veröffentlichungstag der Anmeldung: 04.02.2004
(73) Patentinhaber: Carl Freudenberg KG, 69469 Weinheim (DE)
(72) Erfinder: Rapp, Oskar, 52200 Humes (FR); Kammerer, Eric, 52200 Langres (FR)

(56) Entgegenhaltungen:
- EP-A- 0 284 496
- EP-A- 1 024 318
- DE-A- 19 836 986
- FR-A- 2 354 494
- US-A1- 2002 017 760

## Beschreibung

### Technisches Gebiet

Die Erfindung befasst sich mit einer Manschettendichtung zur Abdichtung des Spalts zwischen einem Gehäuse und einer Wellendurchführung mit einem Stützkörper und daran angebrachten statischen und dynamischen Dichtungselementen, wobei die Dichtungselemente aus unterschiedlichen Werkstoffen bestehen und wobei der Stützkörper einen radial auf die Welle gerichteten Ringteil und einen axial zur Welle verlaufenden Zylinderteil hat.

### Stand der Technik

Durch die DE 198 36 986 A1 ist eine Manschettendichtung bekannt worden, die einen Stützkörper hat, an dem die statische Dichtung angebracht ist. Der Stützkörper hat einen radial auf die Welle gerichteten Ringteil und einen axial zur Welle verlaufenden Zylinderteil. Die statische Dichtung geht materialeinheitlich in eine Vorschaltdichtung über, welche dynamisch an der Welle anliegt. Auf der axialen Innenseite der statischen Dichtung ist ein Dichtkörper aus PTFE angebracht, welcher die dynamische Dichtung für den abzudichtenden Raum darstellt und die in Richtung des abzudichtenden Raums vorgewölbt ist.

Eine andere Ausbildung einer vergleichbaren Dichtung ist in der DE 197 40 822 A1 gezeigt. Auch hier wird ein Stützring etwa vergleichbarer Baureihe benutzt, an dem eine statische und eine dynamische Dichtung befestigt sind. Diese Dichtungsmaterialien können aus ein und demselben Material bestehen; es ist aber auch möglich, sie aus unterschiedlichen Werkstoffen zu fertigen.

### Darstellung der Erfindung

Der Erfindung liegt die Aufgabe zugrunde, die bekannten Dichtungen so weiter zu bilden, dass eine gesteigerte Gebrauchsdauer bei verringerten Herstellungskosten möglich ist. Dabei sollen gleichzeitig die Gebrauchseigenschaften verbessert werden. Schließlich soll die neue Dichtung kostengünstig herzustellen sein.

Ausgehend von dem oben geschilderten Stand der Technik wird die Lösung der gestellten Aufgabe erfingdungsgemäß durch die Merkmale des Anspruchs 1 erreicht. Dass das dynamische Dichtungselement ist an dem radialen Ringteil des Stützkörpers befestigt, und umfasst an der Befestigungsstelle beidseitig den Ringteil, und das statische Dichtungselement ist mit radialem Abstand vom dynamischen Dichtungselement an dem axialen Zylinderteil des Stützkörpers angeordnet Die Dicke des dynamischen Dichtelements an der Befestigungsstelle kann beidseitig gleich oder verschieden sein. Hierbei wird lediglich ein Teil des radialen Ringteils, nämlich der innenliegende Rand des Ringteils, von der dynamischen Dichtung als Anschlussstelle benutzt. Das statische Dichtungselement dagegen beschränkt sich auf eine Verbindung die im Wesentlichen den axialen Zylinderteil des Stützkörpers erfasst. Zwischen dem statischen und dem dynamischen Dichtungselement wird ein radialer Abstand eingehalten, welcher es zulässt, dass beim Herstellungsverfahren beide Dichtungselemente aus sehr unterschiedlichen Materialien hergestellt werden können, wobei die Vulkanisation des elastomeren Materials am Stützkörper für beide Dichtungselemente gleichzeitig durchgeführt werden ist.

Der Stützkörper wird aus einem zähharten Werkstoff, vorzugsweise aus Metall, hergestellt.

Für den radialen Abstand des statischen Dichtungselements vom dynamischen Dichtungselement wird soviel Platz gewählt, wie aus fertigungstechnischen Gründen notwendig ist. Er beträgt mindestens 0,5 mm, um entsprechende Distanzbleche an den vorgegebenen Stellen einsetzen zu können. Die Distanzbleche sind sich gegenüberliegende ringförmige Distanzvorsprünge im Formgebungswerkzeug. Gleichzeitig hat dieses Vorgehen den Vorteil, dass der Stützkörper während einer Vulkanisation in einer definierten Lage gehalten werden ist. Dabei ist die Vulkanisation unter Einsatz von Haftvermittlern durchgeführt. Der jeweils eingesetzte Haftvermittler legt die beiden unterschiedlichen Materialien am Stützkörper fest.

Als dynamische Dichtungselemente werden bevorzugt Ausbildungen und Materialien verwendet, die es ermöglichen, dass die Manschettenform des Dichtungselements erst während des Aufschiebens der Dichtung auf die Welle eintritt. Vor dem Aufschieben auf die Welle ist das dynamische Dichtelement eine Ringscheibe mit vorzugsweise konstanter Dicke. Dabei ist es günstig, wenn das dynamische Dichtungselement zumindest im Bereich der die Welle einfassenden Manschette auf ihrer der Welle zugewandten Fläche mit Ausnehmungen zur Rückförderung des abzudichtenden Mediums versehen ist. Der Rand des dynamischen Dichtungselements wird dabei mit einer Absperrung versehen, so dass das abzudichtende Medium bei Stillstand der Welle nicht nach außen fließen kann.

Das dynamische Dichtungselement kann darüber hinaus auf seiner der Welle abgewandten Fläche mit konzentrischen oder schraubenförmigen Ausnehmungen versehen sein, welche eine leichtere Auswölbung der Manschette während der Montage ermöglichen. Diese Ausnehmungen sind bevorzugt an die Ausnehmungen auf der gegenüberliegenden Innenseite angepasst. Die Ausnehmungen auf beiden Seiten können ein- oder mehrgängig sein.

Um die Einsetzbarkeit des statischen Dichtungselements in die Gehäuseöffnung aus beiden Richtungen zu ermöglichen, hat das Dichtungselement auf seiner Außenseite eine Stirn- und/oder Bodenfase. Die Außenseite des statischen Dichtungselements ist bevorzugt gewellt ausgeführt, um dadurch eine gute Haftung an der Innenwand der Gehäuseöffnung zu ermöglichen. Durch die Gestaltung der Wellen wird die Einpresskraft in die Gehäuseöffnung und die Auspresskraft aus der Gehäuseöffnung gesteuert.

In weiterer Ausgestaltung der Erfindung kann die Welle mit einem Multipolrad versehen sein, das mit einem am Gehäuse angebrachten Sensor zusammenwirkt, um beispielsweise Drehzahlmessungen und auch andere Messdaten zu übertragen.

Durch die Erfindung wird ein Qualitätsvorteil und ein Kostenvorteil erreicht. Der Qualitätsvorteil liegt darin, dass jeder der beiden Werkstoffe auf seine Anforderungen im Betrieb optimiert werden kann. Der Kostenvorteil ist dadurch gegeben, dass der teurere Werkstoff (meistens an der dynamischen Dichtstelle) nur dort eingesetzt werden muss, wo man ihn unbedingt braucht.

Der Werkstoff für das dynamische Dichtelement ist auf die Abdichtung des drehenden Maschinenteils optimiert. An die Temperaturbeständigkeit sind besonders hohe Anforderungen zu stellen, da zur Erwärmung durch das Ölbad die Reibungswärme hinzu kommt. Dies hat einen extrem hohen Einkaufspreis zur Folge. In diesen Werkstoff können auch stark reibungsvermindernde Stoffe eingearbeitet sein, zum Beispiel Wachse / Paraffine. Solche Stoffe dürfen nicht im Werkstoff für das statische Dichtelement vorhanden sein, da der Festsitz verloren ginge und der Dichtring in seiner Bohrung wandern würde. Bewährt hat sich zum Beispiel ein Fluorkautschuk (FPM).

Der Werkstoff für das statische Dichtelement ist auf die Abdichtung des stehenden Maschinenteils optimiert. Da hier keine Reibungswärme hinzukommt, sind die Anforderungen an die Temperaturbeständigkeit weniger hoch. Es kann somit ein vergleichsweise kostengünstiger Werkstoff zum Einsatz kommen. Der Werkstoff ist auf guten Festsitz und geringen Druckverformungsrest entwickelt. Eine Oberflächenbeschichtung für Trockenmontage ist möglich. Bewährt hat sich zum Beispiel ein Acrylatkautschuk (ACM). Die Dichtelemente bestehen vorzugsweise aus einem Polymer zum Beispiel aus einem Elastomer oder einem vernetzbaren Thermoplast. Alternative Werkstoffe für die Manschette des Dichtringes sind auch ein Thermoplast oder Duroplast. Beispielsweise können auch PPS (Polyphenylensulfid), PA (Polyamid), spritzbare Copolymerisate wie FEP (Perfluorethylenpropylen) oder PFA (Perfluoralcoxy Copolymer) oder ein thermoplastisches Elastomer zur Anwendung gelangen. Schließlich ist es vorteilhaft, wenn der Werkstoff des statischen Dichtbereiches und der des dynamischen Dichtbereiches unterschiedlich eingefärbt ist.

### Kurzbeschreibung der Zeichnungen

In der beiliegenden Zeichnung sind mehrere Ausführungsbeispiele des Erfindungsgedankens wiedergegeben.

Es zeigt:
- Fig. 1:: eine Manschettendichtung im Längsschnitt mit einem rechtwinklig ausgeführten Stützkörper mit einer dynamischen und einer statischen Dichtung;
- Fig. 2:: eine Manschettendichtung mit einem T-förmigen Stützkörper;
- Fig. 3:: eine Manschettendichtung mit einem L-förmigen Stützkörper, dessen zylindrischer Abschnitt doppelt ausgeführt ist;
- Fig. 4:: eine Manschettendichtung mit einem Z-förmigen Stützkörper;
- Fig. 5:: eine Manschettendichtung mit einem hakenförmigen Stützkörper;
- Fig. 6 bis 9:: Manschettendichtungen mit Stützkörpern, deren axiale Zylinderteile aus zwei Abschnitten bestehen, die unterschiedlichen Durchmesser haben und
- Fig. 10 und Fig. 11:: zwei Manschettendichtungen, die mit Multipolrädern und Sensoren ausgestattet sind.

### Ausführung der Erfindung

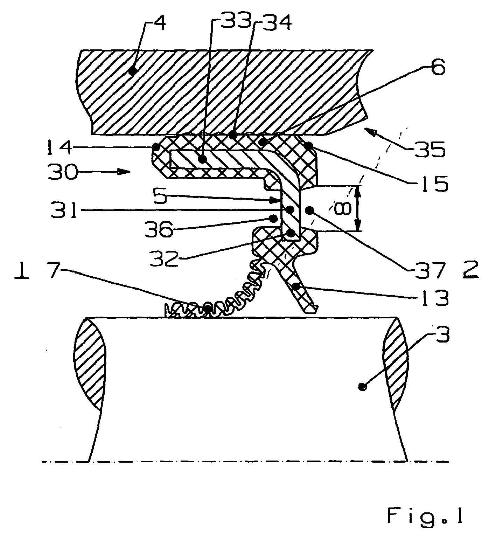

In der Fig. 1 ist eine Manschettendichtung 30 im Längsschnitt gezeigt, welche in den Spalt zwischen dem Gehäuse 4 und der Welle 3 eingesetzt ist. Die Manschettendichtung 30 besteht aus dem Stützkörper 5 und den daran angebrachten Dichtungselementen, nämlich dem statischen Dichtungselement 6 und dem dynamischen Dichtungselement 7. Beide Dichtungselemente 6 und 7 sind aus unterschiedlichen Werkstoffen hergestellt. Das dynamische Dichtungselement 7 ist an dem radial auf die Welle 3 gerichteten Ringteil 31 des Stützkörpers 5 befestigt. An der Befestigungsstelle 32 umfasst das Dichtungselement 7 den Ringteil 31 beidseitig, d.h. sowohl von der Innenseite als auch von der Außenseite her. Die Innenseite ist zu dem abzudichtenden Raum 1 gerichtet, während die Außenseite zur Umgebung 2 weist. Dabei wurde selbstverständlich auch die radial innenliegende Fläche des Ringteils 31 umfasst. Das dynamische Dichtungselement 7 ist zum abzudichtenden Raum 1 vorgewölbt. In Richtung auf die Umgebung 2 ist das dynamische Dichtungselement 7 zusätzlich mit der Schutzlippe 13 versehen, welche in erster Linie zur Schmutzabweisung dient.

Das statische Dichtungselement ist an dem axialen Zylinderteil 33 des Stützkörpers 5 angebracht. In der gezeigten Ausführungsform umfasst es beidseitig den gesamten axialen Zylinderteil 33. Das statische Dichtungselement 6 hat auf seiner Außenseite 34 die Stirnfase 14 und die Bodenphase 15. Beide Fasen 14 und 15 erleichtern das Einschieben der Manschettendichtung 30 in die vorhandene Bohrung in dem Gehäuse 4, die ihrerseits auch mit einer Fase 35 versehen ist.

Zwischen dem statischen Dichtungselement 6 und dem dynamischen Dichtungselement 7 ist der radiale Abstand 8 vorhanden, der sowohl zum Raum 1 als auch zur Umgebung 2 gegeben ist. Er besteht optisch aus zwei am radialen Ringteil 31 umlaufenden und sich gegenüberliegenden Ringnuten 36 und 37.

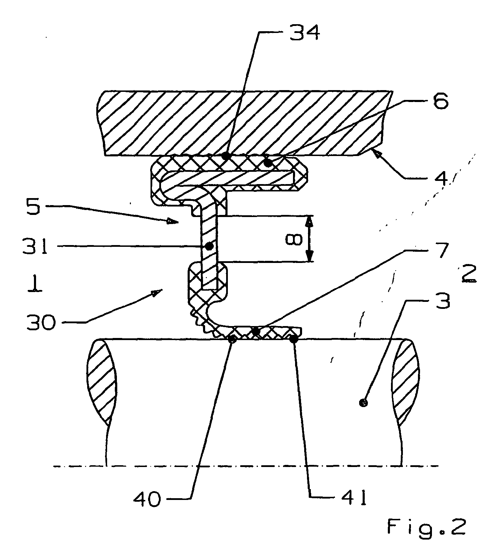

Bei dem in der Fig. 2 gezeigten Ausführungsbeispiel ist der/prinzipielle Aufbau der Manschettendichtung 30, wie er in der Fig. 1 gezeigt wurde, beibehalten. Mit der Abweichung, dass das dynamische Dichtungselement 7 keine Schutzlippe hat und in diesem Fall in die Umgebung 2 vorgewölbt ist. Der Stützkörper 5 ist im Schnitt gesehen, T-förmig, ausgebildet. Hierfür ist das für den Stützkörper 5 verwendete Blech entsprechend gefaltet. Die die Welle 3 einfassende Manschette ist auf ihrer der Welle 3 zugewandten Fläche 40 mit Ausnehmungen zur Rückförderung des abzudichtenden Mediums versehen. Der Manschettenrand 41 ist mit einer Absperrung versehen, die verhindert, dass flüssiges Medium aus dem Raum 1 nach außen dringen kann.

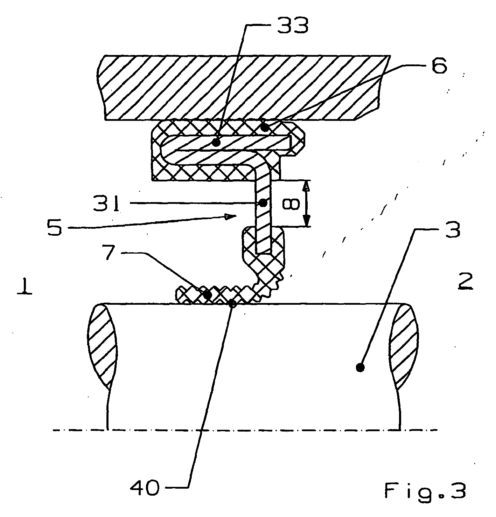

Die Fig. 3 zeigt eine Ausführungsform bei der der Stützkörper 5 L-förmig im Schnitt gesehen ausgebildet ist, jedoch einen verstärkten axialen Zylinderteil 33 hat. Dieser wird durch eine Doppelfaltung des Stützkörpers 5 an dieser Stelle erreicht. Das dynamische Dichtungselement 7 ist zum Innenraum 1 hin vorgewölbt und in seinem Manschettenbereich sowohl auf der der Welle 3 zugewandten Fläche 40 als auch auf der der Welle 3 abgewandten Fläche 42 mit Ausnehmungen versehen. Die doppelseitige Anbringung der Ausnehmungen ergibt eine verbesserte Biegemöglichkeit für das dynamische Dichtungselement 7 insbesondere bei härteren Materialien.

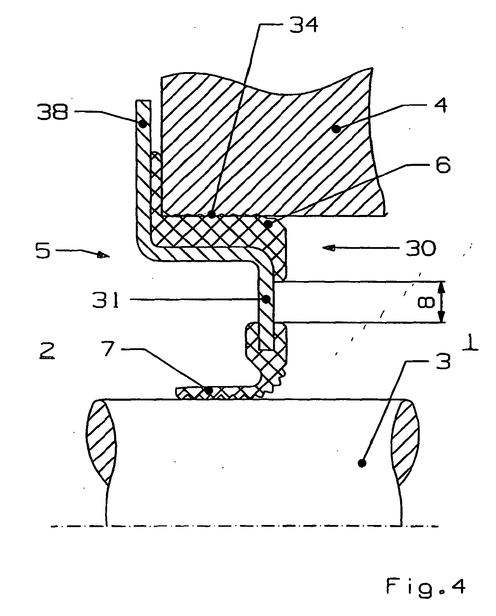

Die Fig. 4 zeigt ein Beispiel, bei dem der Stützkörper 5 im Schnitt gesehen Z-förmig ausgebildet ist. Das statische Dichtungselement 6 ist dabei nur auf der dem Gehäuse 4 zugewandten Seite des Stützkörpers 5 vorgesehen. Der radial außenliegende Flansch 38 des Stützkörpers 5 dienst als axialer Anschlag beim Einbau der Dichtung 30 zwischen Gehäuse 4 und Welle 3. Dabei wird die Dichtung 30 von der Umgebung 2 her in den Spalt zwischen Gehäuse 4 und Welle 3 eingeschoben. Das dynamische Dichtungselement 7 ist in diesem Fall zur Umgebung 2 hin vorgewölbt. Die Ausbildung des statischen Dichtungselements 6 und des dynamischen Dichtungselements 7 entspricht ansonsten im Wesentlichen den Elementen aus der,Fig. 2.

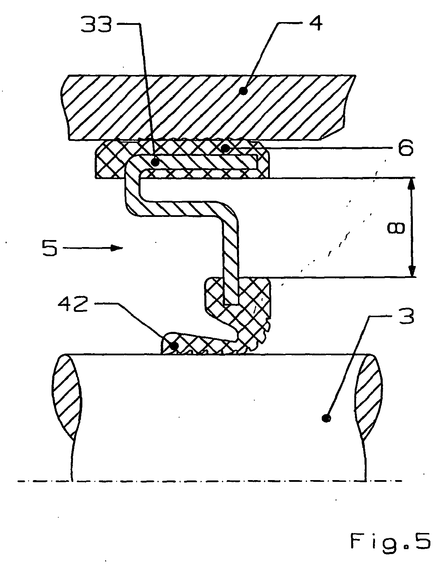

Bei der in der Fig. 5 gezeigten Ausführungsform handelt es sich um eine Manschettendichtung, die für Einbauräume mit großer radialer Erstreckung vorgesehen ist. Der Stützkörper 5 hat im Schnitt gesehen die Form eines Hakens und das statische Dichtungselement 6 ist lediglich an dem nach außen vorstehenden axialen Zylinderteil 33 angebracht. Bei dieser Ausführungsform kann ein erheblich größerer Abstand zwischen dem statischen Dichtungselement 6 und dem dynamischen Dichtungselement 7 eingehalten werden. Dabei ist es günstig, wenn das dynamische Dichtungselement 7 zu seinem freien Ende 42 eine zunehmende Dicke hat.

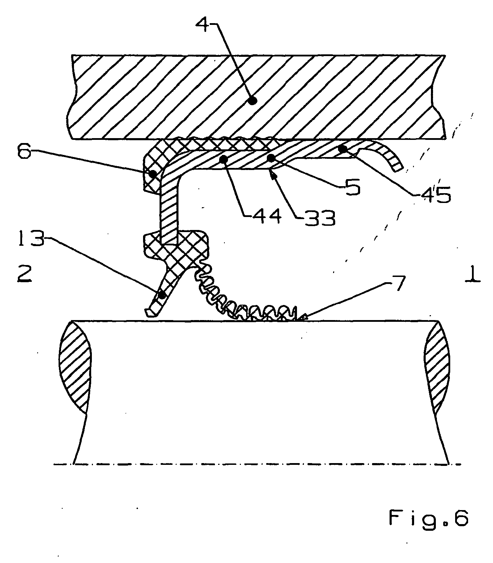

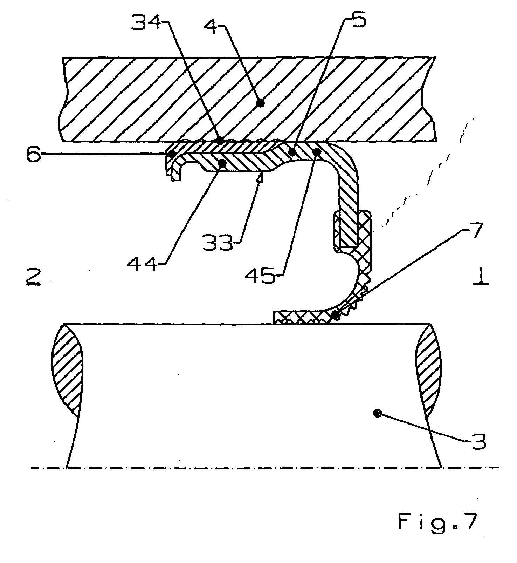

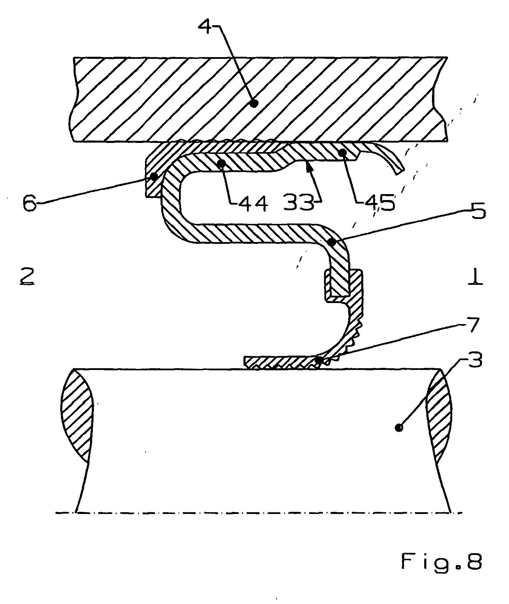

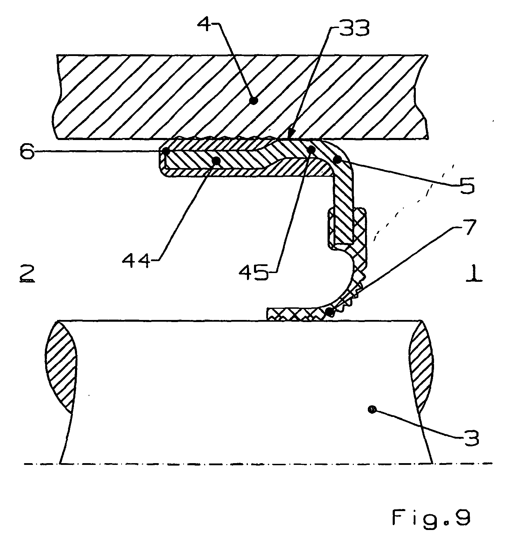

In den Fig. 6 bis 9 sind mehrere Ausbildungsformen von Manschettendichtungen gezeigt, die unterschiedliche Stützkörper 5 mit unterschiedlich daran angebrachten statischen Dichtungselementen 6 und dynamischen Dichtungselementen 7 haben. Die Stützkörper 5 haben hier auf dem axialen Zylinderteil 33 zwei unterschiedliche Abschnitte 44 und 45. Dabei haben die Abschnitte einen geringeren Durchmesser als die Abschnitte 45. Eine solche Ausbildung ist günstig, wenn neben der guten statischen Dichtung 6 in der Gehäusebohrung auch noch ein sehr fester Sitz des Stützkörpers 5 in der Gehäusebohrung erreicht werden soll, indem der Stützkörper 5, d.h. sein Abschnitt 45 mit der Außenfläche direkt in der Gehäusebohrung am Gehäuse 4 anliegt.

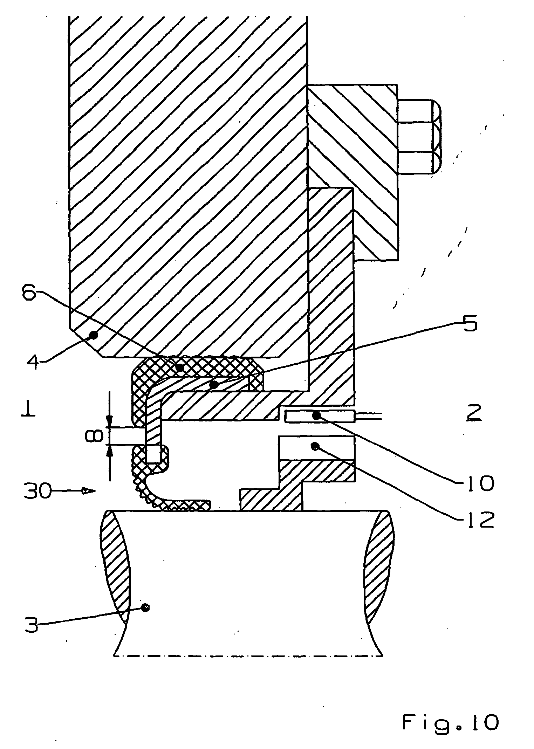

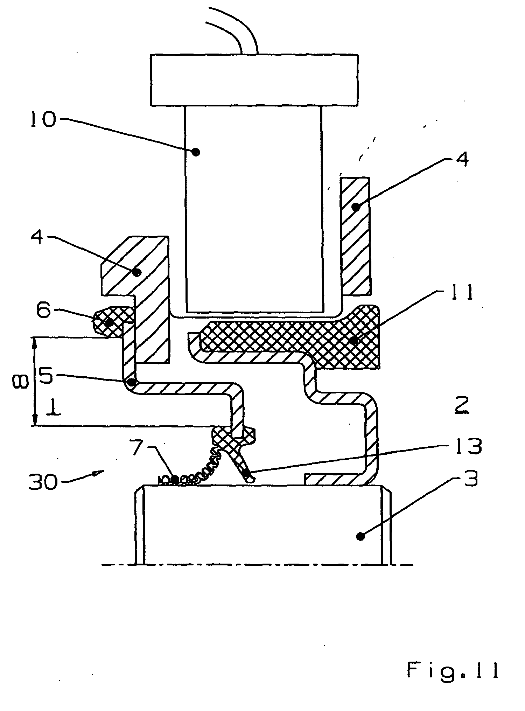

In den Ausführungsbeispielen der Figuren 10 und 11 sind die Manschettendichtungen 30 durch Messeinrichtungen ergänzt, die im Wesentlichen aus einem an der Welle 3 befestigten Multipolrad 11 bzw. Geberrad 12 und einem diesen gegenüberliegenden Sensor 10 bestehen. Hiermit können Drehzahlen, Drehungenauigkeiten und dergl. gemessen und erfasst werden.

## Patentansprüche

1. Manschettendichtung (30) zur Abdichtung des Spalts zwischen einem Gehäuse (4) und einer Welle (3) mit einem aus einem zähharten Werkstoff bestehenden Stützkörper (5), welcher die statischen und dynamischen Dichtungselemente (6, 7) hält, wobei die elastischen Dichtungselemente (6, 7) aus unterschiedlichen. Werkstoffen bestehen und die Außenseite (34) des statischen Dichtungselements (6) gewellt ist, und wobei im montierten Zustand der Stützkörper (5) einen radial auf die Welle (3) gerichteten Ringteil (31) und einen axial zur Welle (3) verlaufenden Zylinderteil (33) hat, **dadurch gekennzeichnet, dass** die Dichtungselemente (6,7) mit dem Stützkörper (5) durch Vulkanisation unter Einsatz eines Haftvermittlers verbunden sind und **dass** das dynamische Dichtungselement (7) an dem radialen Ringteil (31) des Stützkörpers (5) befestigt ist und an der Befestigungsstelle (32) beidseitig den Ringteil (31) umfasst und dass das statische Dichtungselement (6) mit radialem Abstand (8) zum dynamischen Dichtungselement (7) an dem axialen Zylinderteil (33) des Stützkörpers (5) angeordnet ist.

2. Manschettendichtung nach Anspruch 1, **dadurch gekennzeichnet, dass** der Stützkörper (5) aus Metall besteht.

3. Manschettendichtung nach Anspruch 1 oder 2, **dadurch gekennzeichnet, dass** der radiale Abstand (8) des statischen Dichtungselements (6) von dem dynamischen Dichtungselement (7) mindestens 0,5 mm beträgt.

4. Manschettendichtung nach Anspruch 1 bis 3, **dadurch gekennzeichnet, dass** das dynamische Dichtungselement (7) während des Aufschiebens der Dichtung auf die Welle (3) seine Manschettenform erhält.

5. Manschettendichtung nach Anspruch 1 bis 4, **dadurch gekennzeichnet, dass** das dynamische Dichtungselement (7) zumindest im Bereich der die Welle (3) einfassenden Manschette auf ihrer der Welle (3) zugewandten Fläche (40) mit Ausnehmungen zur Rückförderung des abzudichtenden Mediums versehen ist.

6. Manschettendichtung nach Anspruch 1 bis 5, **dadurch gekennzeichnet, dass** der Manschettenrand (41) des dynamischen Dichtungselements (7) eine Absperrung (41) hat.

7. Manschettendichtung nach Anspruch 1 bis 6, **dadurch gekennzeichnet, dass** das dynamische Dichtungselement (7) auf seiner der Welle (3) abgewandten Fläche (42) mit konzentrischen oder schraubenförmigen Ausnehmungen versehen ist.

8. Manschettendichtung nach Anspruch 7, **dadurch gekennzeichnet, dass** die Ausnehmungen ein- oder mehrgängig sind.

9. Manschettendichtung nach Anspruch 1 bis 8, **dadurch gekennzeichnet, dass** die Manschette des dynamischen Dichtungselements (7) zur Umgebung (2) oder zum abzudichtenden Raum vorgewölbt ist.

10. Manschettendichtung nach Anspruch 1 bis 9, **dadurch gekennzeichnet, dass** das statische Dichtungselement (6) auf seiner Außenseite (34) eine Stirn- und/oder Bodenfase (14, 15) hat.

11. Manschettendichtung nach Anspruch 1 bis 10, **dadurch gekennzeichnet, dass** die Welle (3) mit einem Geberrad (12) bzw. einem Multipolrad (11) versehen ist, welche mit einem am Gehäuse (4) angebrachten Sensor (10) zusammenwirken.

## Claims

1. Sleeve seal (30) for sealing the gap between a housing (4) and a shaft (3), with a supporting body (5) which consists of a tough and hard material and holds the static and dynamic sealing elements (6, 7), the elastic sealing elements (6, 7) consisting of different materials and the outer side (34) of the static sealing element (6) being corrugated, and, in the fitted state, the supporting body (5) having an annular part (31), directed radially at the shaft (3), and a cylindrical part (33), running axially in relation to the shaft (3), **characterized in that** the sealing elements (6, 7) are connected to the supporting body (5) by vulcanization using a coupling agent, and **in that** the dynamic sealing element (7) is fastened to the radial annular part (31) of the supporting body (5) and encloses the annular part (31) on both sides at the fastening location (32), and **in that** the static sealing element (6) is arranged at a radial distance (8) from the dynamic sealing element (7) on the axial cylindrical part (33) of the supporting body (5).

2. Sleeve seal according to Claim 1, **characterized in that** the supporting body (5) consists of metal.

3. Sleeve seal according to Claim 1 or 2, **characterized in that** the radial distance (8) of the static sealing element (6) from the dynamic sealing element (7) is at least 0.5 mm.

4. Sleeve seal according to Claims 1 to 3, **characterized in that** the dynamic sealing element (7) retains its sleeve shape while the seal is being pushed onto the shaft (3).

5. Sleeve seal according to Claims 1 to 4, **characterized in that** the dynamic sealing element (7) is provided at least in the region of the sleeve enclosing the shaft (3), on its surface (40) facing the shaft (3), with recesses for the return of the medium to be sealed.

6. Sleeve seal according to Claims 1 to 5, **characterized in that** the sleeve rim (41) of the dynamic sealing element (7) has a shut-off.

7. Sleeve seal according to Claims 1 to 6, **characterized in that** the dynamic sealing element (7) is provided on its surface (42) facing away from the shaft (3) with concentric or helical recesses.

8. Sleeve seal according to Claim 7, **characterized in that** the recesses are single- or multi-threaded.

9. Sleeve seal according to Claims 1 to 8, **characterized in that** the sleeve of the dynamic sealing element (7) is made to protrude towards the surroundings (2) or towards the space to be sealed.

10. Sleeve seal according to Claims 1 to 9, **characterized in that** the static sealing element (6) has on its outer side (34) a front-end and/or back-end bevel (14, 15).

11. Sleeve seal according to Claims 1 to 10, **characterized in that** the shaft (3) is provided with a rotary encoder (12) or a multipole wheel (11), which interact with a sensor (10) attached to the housing (4).

## Revendications

1. Joint d'étanchéité à manchette (30) pour l'obturation de la fente entre un boîtier (4) et un arbre (3) avec un corps de support (5) composé d'une matière tenace, qui tient les éléments d'étanchéité statiques et dynamiques (6, 7), dans lequel les éléments d'étanchéité élastiques (6, 7) se composent de matières différentes et la face extérieure (34) de l'élément d'étanchéité statique (6) est ondulée, et dans lequel, à l'état monté, le corps de support (5) comprend une partie annulaire (31) dirigée radialement vers l'arbre (3) et une partie cylindrique (33) dirigée axialement par rapport à l'arbre (3), **caractérisé en ce que** les éléments d'étanchéité (6, 7) sont assemblés au corps de support (5) par vulcanisation en utilisant un agent d'accrochage et **en ce que** l'élément d'étanchéité dynamique (7) est fixé sur la partie annulaire radiale (31) du corps de support (5) et entoure la partie annulaire (31) sur ses deux faces au point de fixation (32), et **en ce que** l'élément d'étanchéité statique (6) est disposé sur la partie cylindrique axiale (33) du corps de support (5) à une distance radiale (8) de l'élément d'étanchéité dynamique (7).

2. Joint d'étanchéité à manchette selon la revendication 1, **caractérisé en ce que** le corps de support (5) se compose de métal.

3. Joint d'étanchéité à manchette selon la revendication 1 ou 2, **caractérisé en ce que** la distance radiale (8) entre l'élément d'étanchéité statique (6) et l'élément d'étanchéité dynamique (7) vaut au moins 0,5 mm.

4. Joint d'étanchéité à manchette selon la revendication 1 à 3, **caractérisé en ce que** l'élément d'étanchéité dynamique (7) prend sa forme de manchette pendant le glissement du joint sur l'arbre (3).

5. Joint d'étanchéité à manchette selon la revendication 1 à 4, **caractérisé en ce que** l'élément d'étanchéité dynamique (7) est pourvu, sur sa face (40) tournée vers l'arbre (3), au moins dans la région de la manchette entourant l'arbre (3), d'évidements pour le retour du fluide à retenir de façon étanche.

6. Joint d'étanchéité à manchette selon la revendication 1 à 5, **caractérisé en ce que** le bord (41) de la manchette de l'élément d'étanchéité dynamique (7) est pourvu d'un arrêt.

7. Joint d'étanchéité à manchette selon la revendication 1 à 6, **caractérisé en ce que** l'élément d'étanchéité dynamique (7) est pourvu, sur sa face (42) située à l'opposé de l'arbre (3), d'évidement concentriques ou hélicoïdaux.

8. Joint d'étanchéité à manchette selon la revendication 7, **caractérisé en ce que** les évidements comportent une ou plusieurs entrées.

9. Joint d'étanchéité à manchette selon la revendication 1 à 8, **caractérisé en ce que** la manchette de l'élément d'étanchéité dynamique (7) est précintrée vers l'ambiance (2) ou vers l'espace à rendre étanche.

10. Joint d'étanchéité à manchette selon la revendication 1 à 9, **caractérisé en ce que** l'élément d'étanchéité statique (6) porte sur sa face extérieure (34) un chanfrein de face et/ou de fond (14, 15).

11. Joint d'étanchéité à manchette selon la revendication 1 à 10, **caractérisé en ce que** l'arbre (3) est pourvu d'une roue de capteur (12), respectivement d'une roue multipolaire (11), qui coopèrent avec un détecteur (10) installé sur le boîtier (4).
